# EUROPEAN PATENT SPECIFICATION

(11) **EP 2 933 466 B1**
(45) Date of publication and mention of the grant of the patent: **13.06.2018**
(21) Application number: 14164732.1
(22) Date of filing: 15.04.2014
(51) Int. Cl.: F02F 1/42

(54) **Cylinder head for a combustion engine**
Zylinderkopf für eine Brennkraftmaschine
Tête de cylindre pour moteur à combustion

(43) Date of publication of application: 21.10.2015
(73) Proprietor: Volvo Car Corporation, 40531 Göteborg (SE)
(72) Inventor: Josefsson, Göran, 42341 Torslanda (SE); Ekdahl, Roy, 44837 Floda (SE); Berntsson, Andreas, 44277 Romelanda (SE)
(74) Representative: Volvo Car Corporation

(56) References cited:
- DE-A1- 4 437 279
- FR-A3- 2 933 629
- US-A1- 2003 079 708

## Description

### TECHNICAL FIELD

The invention relates to a cylinder head for a combustion engine. The cylinder head comprises at least one intake channel comprising an intake port. The intake channel comprises an upper wall, a lower wall and an end zone. The intake port comprises a bottom edge. An intake valve is arranged to cover the intake port where the intake valve is arranged along an intake valve axis. The invention further relates to a method for improving tumbling.

### BACKGROUND ART

Combustion engines comprise a cylinder head being mounted on top of a cylinder block. A modern combustion engine comprises a number of cylinders where each cylinder is fed fuel and air. The air is being fed to the cylinder by an intake channel. The design of the intake channel may affect the performance and efficiency of the engine as the intake channel determines the amount of air that is being delivered to the engine as well as the flow pattern for the incoming air. In a turbocharged engine a design of the intake channel that gives a high pressure drop over the length of the intake channel combined with a non-optimal tumbling flow pattern may result in negative effects on performance and efficiency. One area where this is especially experienced today is when the engine is operating under low loads at low engine speeds.

US 2003/0079708 discloses a cylinder head for a combustion engine. The cylinder head comprises an intake passageway extending from an inlet on a rear surface of the cylinder head towards an outlet on a first surface of the cylinder head. The intake passageway comprises a straight portion extending from a rear surface of the cylinder head. The intake passageway is arranged at an angle relative the first surface.

There is thus a need for an improved cylinder head.

### SUMMARY OF THE INVENTION

The object of the present invention is to provide an inventive cylinder head for a combustion engine and a method for improving tumbling in an internal combustion engine. This object is achieved by the features of the characterizing portion of claims 1 and 10. Additional features of the invention are set out in the dependent claims.

The invention relates to a cylinder head for an internal combustion engine. The cylinder head comprises at least one intake channel comprising an intake port. The intake channel comprises an upper wall, a lower wall and an end zone. The intake port comprises a bottom edge. An intake valve is arranged to cover the intake port where the intake valve is arranged along an intake valve axis. The lower wall of the at least one intake channel is essentially straight in a lengthwise direction. Essentially straight may mean that a radius of the lower wall is greater than 200mm, specifically greater than 300 mm. The lower wall of the at least one intake channel may also be completely straight in a lengthwise direction. The lower wall of the intake channel is positioned at a first angle relative the centre line of the cylinder bore. The intake valve axis is positioned at a second angle relative the lower wall of the intake channel.

The cylinder head is arranged to be mounted on a cylinder block where the cylinder block comprises at least one cylinder bore where said cylinder bore is arranged to slidably receive a piston. The cylinder bore and piston forms a combustion chamber.

One advantage of the invention is that a cylinder head for a combustion engine according to the invention increases the tumble of the fuel-air mixture inside the cylinder without experiencing pressure losses at a magnitude which will decrease the performance of the engine. The intake flow in an engine according to the invention is directed more horizontally into the cylinder shielding fuel from cylinder liner for a direct injected engine. Improved tumble leads to greater motion of the air during fuel injection. This leads to that the mixing of air and fuel inside the cylinder is improved. There is thus a high level of turbulence at the time of combustion which leads to a more efficient combustion.

The invention further allows for a more efficient engine when running on low motor speeds. The invention allows for a greater compression to be achieved without experiencing increased engine knocking. Another advantage is that a cylinder head according to the invention allows for use of more exhaust gas recirculation (EGR) with kept combustion stability.

The end zone of the intake channel expands conically towards the intake port relative to the remainder of the intake channel. By having a conically expanding area of the end zone the intake port further improvements to the tumble motion is achieved. This also helps the mixing of fuel and air. The end zone may expand conically upwards, downwards, or symmetrically over the central line of the intake channel.

The first angle may be between 57° and 74°, specifically between 60° and 70°, more specifically between 66° and 67°. The second angle may be between 40° and 53°, specifically between 45° and 50°, more specifically between 47° and 48°.

The end zone of the lower wall and an intake port surface may be arranged at a third angle relative each other forming a sharp edge. The third angle is smaller than 130°, more specifically smaller than 80°. Alternatively, the end zone of the lower wall and the intake port surface are connected by a rounded edge with radius R, wherein the radius R is less than 2.5 mm. The rounded edge is formed during manufacturing of the intake port surface. Having a sharp edge or a rounded edge with a small radius decreases flow separation as the air enters the cylinder. This gives rise to a decrease of recirculation zones in the cylinder as there is little to no flow direction changes when the air enters the combustion chamber. This also leads to a better mixture of fuel and air. A larger angle does not provide the desired flow separation.

The first angle may be chosen such that a fluid flow passing through the intake port is directed towards an exhaust valve of the cylinder head. This leads to that the exhaust valve is cooled by the incoming fluid.

The invention further relates to a method for improving tumbling in an internal combustion engine. The internal combustion engine comprises a cylinder block and a cylinder head mounted on said cylinder block. The cylinder head comprises at least one intake channel comprising an intake port. The intake channel comprises an upper wall, a lower wall and an end zone. An intake valve comprising an intake valve is arranged to cover the intake port where the intake valve is arranged along an intake valve axis. The method comprises
- arranging an essentially straight lower wall of the at least one intake channel,
- positioning the intake channel such that the lower wall of the intake channel is positioned at a first angle relative the centre line of the cylinder bore,
- positioning the intake valve axis such that the intake valve axis is positioned at a second angle relative the lower wall of the intake channel,
- arranging the end zone of the intake channel to expand conically towards the intake port relative to the remainder of the intake channel.

The method may further comprise
- positioning the intake channel such that the lower wall of the intake channel is positioned at a first angle relative the centre line of the cylinder bore, wherein the first angle is between 57° and 74°, specifically between 60° and 70°, more specifically between 66° and 67°.

The method may further comprise
- positioning the intake valve axis such that the intake valve axis is positioned at a second angle relative the lower wall of the intake channel, wherein the second angle is between 40° and 53°, specifically between 45° and 50°, more specifically between 47° and 48°.

The method may comprise:
- arranging the end zone of the lower wall at a third angle relative an intake port surface at a third angle relative each other.

The method may comprise:
- choosing the first angle such that a fluid flow passing through the intake port is directed towards an exhaust valve of the cylinder head.

### BRIEF DESCRIPTION OF THE DRAWINGS

Figure 1 schematically shows a cylinder head of a combustion engine according to the invention.
Figure 2 schematically shows a detailed view of an intake channel of a combustion engine according to one example of the invention.
Figure 3 schematically shows a detailed view of the end zone of the lower wall according to a different example of the invention.
Figure 4 schematically shows the effect of tumbling in a cylinder in a combustion engine having a cylinder head according to the invention.

### DETAILED DESCRIPTION

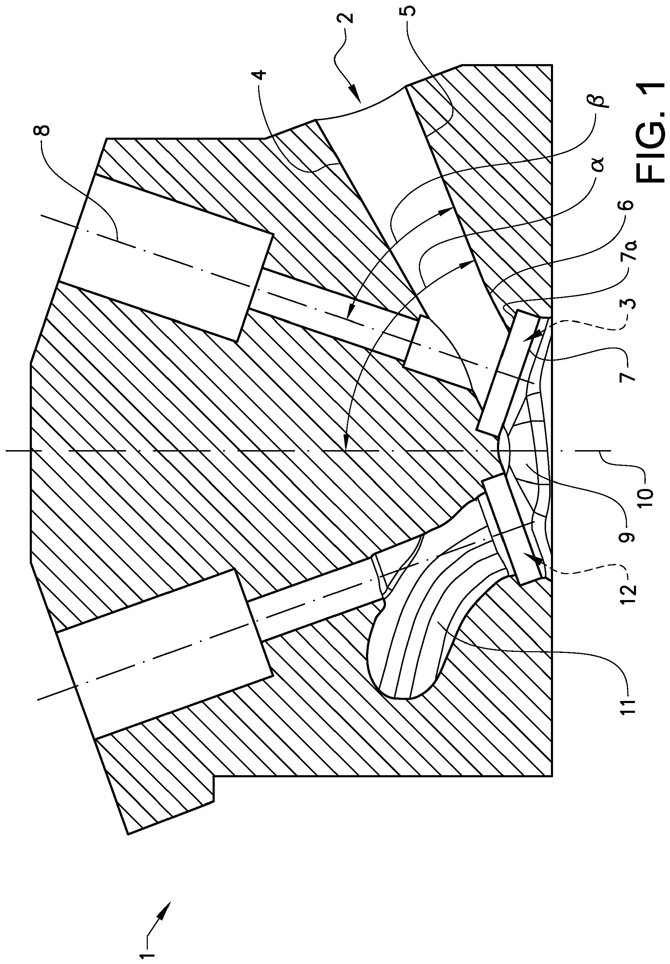

Figure 1 schematically shows a cylinder head 1 for a combustion engine according to the invention. The cylinder head 1 comprises an intake channel 2 comprising an intake port 3. The intake channel 2 comprises an upper wall 4, a lower wall 5 and an end zone 6. The end zone 6 constitutes the last 8-12 mm of the intake channel 2, preferably the last 10 mm of the intake channel 2. The intake port 3 comprises a bottom edge 7 and a top edge 7a. An intake valve (not shown) is arranged to cover the intake port 3 where the intake valve is arranged along an intake valve axis 8. The lower wall 5 of the intake channel 2 is essentially straight in a lengthwise direction. With lengthwise direction is meant in the direction running from the intake channel 2 opening to the intake port 3. The cylinder head 1 further comprises a combustion chamber 9. The lower wall 5 of the intake channel 2 is positioned at a first angle α relative a centre line 10 of the combustion chamber 9. The intake valve axis 8 is positioned at a second angle β relative the lower wall 5 of the intake channel 2. The cylinder head 1 further comprises an exhaust channel 11 comprising an exhaust port 12.

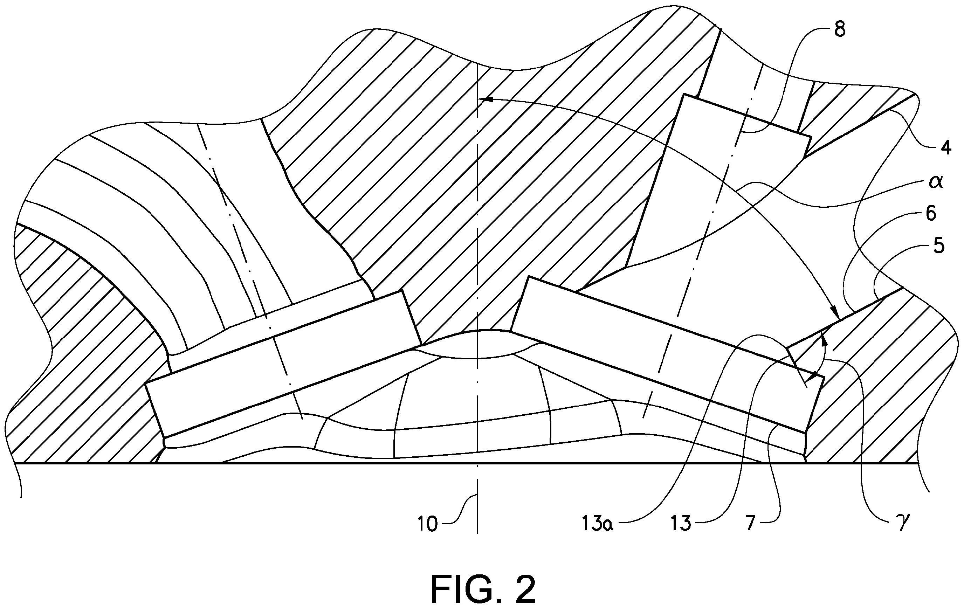

Figure 2 schematically shows a detailed view of an intake channel 2 of a cylinder head 1 according to one example of the invention. In figure 2 it can be seen that the end zone 6 of the lower wall 5 of the intake channel 2 and an intake port surface 13 are arranged at a third angle γ relative each other. The intake port surface 13 extend from the top surface 7a of the intake port to the lower wall 5 of the intake channel 2 and forms a sharp edge 13a. The size of the intake port surface 13 is not to scale for illustrative purposes. The sharp edge 13a may also be formed by arranging the end zone 6 of the lower wall 5 with the top surface 7a of the intake port 3 at the third angle y, thereby omitting the intake port surface 13.

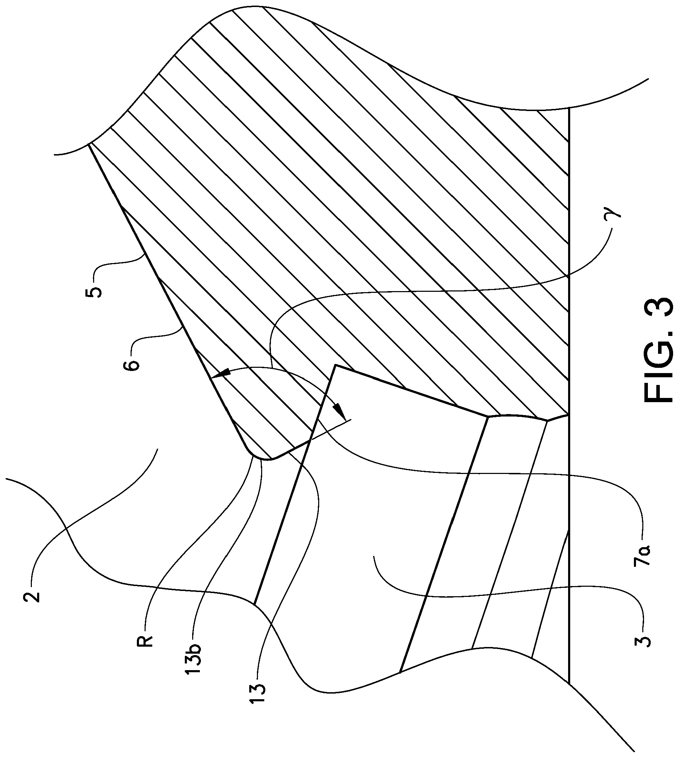

Figure 3 schematically shows a detailed view of the end zone 6 of the lower wall 5 according to a different example of the invention. In figure 3 the intake port surface 13 is manufactured to form a rounded edge 13b with a radius R less than 2.5 mm. Instead of the sharp edge 13a as seen in figure 2 the end zone 6 of the lower wall 5 and the intake port surface 13 are connected by a radius R formed from manufacturing the intake port surface 13 adjacent the end zone 6 of the intake channel 2. The intake port surface 13 and the end zone 6 are arranged at the third angle γ. Also in this example the radius R may connect the end zone 6 of the lower wall 5 with the top surface 7a of the intake port 3, where the end zone 6 of the lower wall 5 and the top surface 7a of the intake port 3 are arranged at the third angle γ.

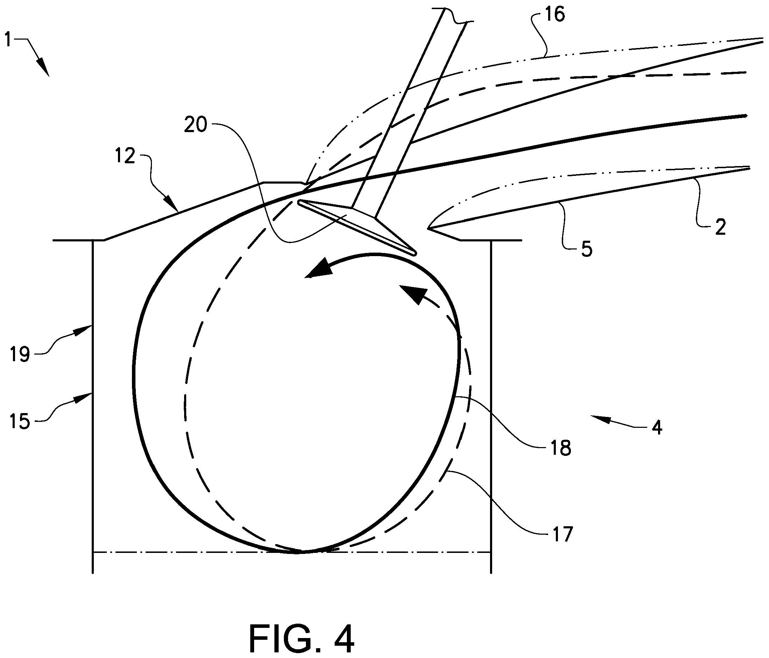

Figure 4 schematically shows the effect of tumbling in a cylinder in a combustion engine having a cylinder head according to the invention. In figure 4 the cylinder head 1 is mounted on a cylinder block 14. The cylinder block 14 comprises a number of one cylinder bores 15 where one is shown in figure 4. Said cylinder bore 15 is arranged to slidably receive a piston (not shown). The cylinder bore 15 and piston form a combustion chamber 9.

In figure 4 a prior art intake channel 16 is shown outlined in dash-dotted lines. An intake channel 2 according to the invention is shown in solid lines. In order to illustrate the improved tumbling a first air flow 17 associated with the prior art intake channel 16 is shown with a dashed line and a second air flow 18 associated with intake channel 2 is shown with a solid line. As can be seen from the figure, the first air flow 17 associated with the prior art intake channel 16 does not extend all the way to a cylinder bore wall 19 adjacent the exhaust port 12. This leads to a less effective mixing of the fuel and the air inside the cylinder bore 15. The second air flow 18 associated with intake channel 2 extends closer to the cylinder bore wall 19 and the exhaust port 12 due to that the lower wall 5 of the intake channel 2 is essentially straight, leading to that these areas are cooled by the second air flow 18. The second air flow, due to its flatter profile is also less restricted by inlet valve 20 than the first air flow 17.

The various parts of the cylinder head are manufactured according to techniques known in the art.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description are to be regarded as illustrative in nature, and not restrictive.

## Claims

1. A cylinder head (1) for an internal combustion engine;
- said cylinder head (1) comprising at least one intake channel (2) comprising an intake port (3)
- the intake channel (2) comprising an upper wall (4), a lower wall (5) and an end zone (6)
- the intake port (3) comprising a bottom edge (7)
- an intake valve arranged to cover the intake port (3), the intake valve being arranged along an intake valve axis (8),
**characterized in that**
- the lower wall (5) of the at least one intake channel (2) is essentially straight in a lengthwise direction,
- the lower wall (5) of the intake channel (2) is positioned at a first angle (α) relative a centre line (10) of a combustion chamber (9),
- the intake valve axis (8) is positioned at a second angle (β) relative the lower wall (5) of the intake channel (2).
- the end zone (6) of the intake channel (2) expands conically towards the intake port (3) relative to the remainder of the intake channel (2).

2. A cylinder head (1) according to claim 1, wherein the first angle (α) is between 57° and 74°, specifically between 60° and 70°, more specifically between 66° and 67°.

3. A cylinder head (1) according to claim 1 or 2, wherein the second angle (β) is between 40° and 53°, specifically between 45° and 50°, more specifically between 47° and 48°.

4. A cylinder head (1) according to any of the preceding claims, wherein the lower wall (5) of the at least one intake channel (2) has a radius greater than 300 mm.

5. A cylinder head (1) according to any of the preceding claims, wherein the end zone (6) of the lower wall (5) and an intake port surface (13) are arranged at a third angle (γ) relative each other.

6. A cylinder head (1) according to claim 5, wherein the third angle (γ) is smaller than 130°, specifically smaller than 80°.

7. A cylinder head (1) to according to any one of claims 1-4, wherein the end zone (6) of the lower wall (5) and the intake port surface (13) are connected by a rounded edge (13b) with radius R, wherein the radius R is less than 2.5 mm.

8. A cylinder head (1) according to any one of the preceding claims, wherein the first angle (α) is chosen such that a fluid flow passing through the intake port (3) is directed towards an exhaust valve of the cylinder head (1).

9. Method for improving tumbling in an internal combustion engine, the internal combustion engine comprising a cylinder head (1) being arranged to be mounted on a cylinder block (14)
- said cylinder head (1) comprising at least one intake channel (2) comprising an intake port (3),
- the intake channel (2) comprising an upper wall (4), a lower wall (5) and an end zone (6),
- an intake valve arranged to cover the intake port (3), the intake valve being arranged along an intake valve axis (8),
**characterized in that** the method comprises:
- arranging an essentially straight lower wall (5) of the at least one intake channel (2)
- positioning the intake channel (2) such that the lower wall (5) of the intake channel (2) is positioned at a first angle (α) relative the centre line (10) of the cylinder bore
- positioning the intake valve axis (8) such that the intake valve axis (8) is positioned at a second angle (β) relative the lower wall (5) of the intake channel (2).
- arranging the end zone (6) of the intake channel (2) to expand conically towards the intake port (3) relative to the remainder of the intake channel (2).

10. A method according to claim 9, wherein the method comprises
- positioning the intake channel (2) such that the lower wall (5) of the intake channel (2) is positioned at a first angle (α) relative the centre line (10) of the cylinder bore, wherein the first angle (α) is between 57° and 74°, specifically between 60° and 70°, more specifically between 66° and 67°.

11. A method according to claim 9 or 10, wherein the method comprises
- positioning the intake valve axis (8) such that the intake valve axis (8) is positioned at a second angle (β) relative the lower wall (5) of the intake channel (2), wherein the second angle (β) is between 40° and 53°, specifically between 45° and 50°, more specifically between 47° and 48°.

12. A method according to any of claims 9-11, wherein the method comprises:
- arranging the end zone (6) of the lower wall (5) at a third angle (γ) relative an intake port surface (13).

13. A method according to any one of the claims 9-12, wherein the method comprises:
- choosing the first angle (α) such that a fluid flow passing through the intake port (3) is directed towards an exhaust valve (12) of the cylinder head (1).

## Patentansprüche

1. Zylinderkopf (1) für eine Brennkraftmaschine,
- wobei der Zylinderkopf (1) wenigstens einen Einlasskanal (2) umfasst, der eine Einlassöffnung (3) umfasst,
- wobei der Einlasskanal (2) eine obere Wand (4), eine untere Wand (5) und einen Endbereich (6) umfasst,
- wobei die Einlassöffnung (3) eine Unterkante (7) umfasst,
- wobei ein Einlassventil angeordnet ist, um die Einlassöffnung (3) abzudecken, wobei das Einlassventil entlang einer Einlassventilachse (8) angeordnet ist,
**dadurch gekennzeichnet, dass**
- die untere Wand (5) des wenigstens einen Einlasskanals (2) im Wesentlichen in einer Längsrichtung gerade verläuft,
- die untere Wand (5) des Einlasskanals (2) relativ zu einer Mittellinie (10) eines Verbrennungsraums (9) in einem ersten Winkel (α) positioniert ist,
- die Einlassventilachse (8) relativ zu der unteren Wand (5) des Einlasskanals (2) in einem zweiten Winkel (β) angeordnet ist,
- sich der Endbereich (6) des Einlasskanals (2) relativ zu dem Rest des Einlasskanals (2) konisch zu der Einlassöffnung (3) hin erweitert.

2. Zylinderkopf (1) nach Anspruch 1, wobei der erste Winkel (α) zwischen 57° und 74°, insbesondere zwischen 60° und 70°, besonders bevorzugt zwischen 66° und 67° liegt.

3. Zylinderkopf (1) nach Anspruch 1 oder 2, wobei der zweite Winkel (β) zwischen 40° und 53°, insbesondere zwischen 45° und 50°, besonders bevorzugt zwischen 47° und 48° liegt.

4. Zylinderkopf (1) nach einem der vorhergehenden Ansprüche, wobei die untere Wand (5) des wenigstens einen Einlasskanals (2) einen Radius von über 300 mm aufweist.

5. Zylinderkopf (1) nach einem der vorhergehenden Ansprüche, wobei der Endbereich (6) der unteren Wand (5) und eine Fläche (13) der Einlassöffnung relativ zueinander in einem dritten Winkel (γ) angeordnet sind.

6. Zylinderkopf (1) nach Anspruch 5, wobei der dritte Winkel (γ) kleiner als 130°, insbesondere kleiner als 80° ist.

7. Zylinderkopf (1) nach einem der Ansprüche 1 bis 4, wobei der Endbereich (6) der unteren Wand (5) und die Fläche (13) der Einlassöffnung über eine einen Radius R aufweisende gerundete Kante (13b) verbunden sind, wobei der Radius R kleiner als 2,5 mm ist.

8. Zylinderkopf (1) nach einem der vorhergehenden Ansprüche, wobei der erste Winkel (α) so ausgewählt ist, dass ein durch die Einlassöffnung (3) geführter Flüssigkeitsstrom zu einem Auslassventil des Zylinderkopfs (1) geleitet wird.

9. Verfahren zum Verbessern von Taumeln in einer Brennkraftmaschine, wobei die Brennkraftmaschine einen Zylinderkopf (1) umfasst, der so angeordnet ist, dass er an einem Zylinderblock (14) befestigt ist,
- wobei der Zylinderkopf (1) wenigstens einen Einlasskanal (2) umfasst, der eine Einlassöffnung (3) umfasst,
- wobei der Einlasskanal (2) eine obere Wand (4), eine untere Wand (5) und einen Endbereich (6) umfasst,
- wobei ein Einlassventil angeordnet ist, um die Einlassöffnung (3) abzudecken, wobei das Einlassventil entlang einer Einlassventilachse (8) angeordnet ist,
**dadurch gekennzeichnet, dass** das Verfahren Folgendes umfasst:
- Anordnen einer im Wesentlichen geraden unteren Wand (5) des wenigstens einen Einlasskanals (2),
- Positionieren des Einlasskanals (2) auf eine solche Weise, dass die untere Wand (5) des Einlasskanals (2) relativ zu der Mittellinie (10) der Zylinderbohrung in einem ersten Winkel (α) positioniert ist,
- Positionieren der Einlassventilachse (8) auf eine solche Weise, dass die Einlassventilachse (8) relativ zu der unteren Wand (5) des Einlasskanals (2) in einem zweiten Winkel (β) positioniert ist,
- Anordnen des Endbereichs (6) des Einlasskanals (2) so, dass er sich relativ zu dem Rest des Einlasskanals (2) konisch zu der Einlassöffnung (3) hin erweitert.

10. Verfahren nach Anspruch 9, wobei das Verfahren Folgendes umfasst:
- Positionieren des Einlasskanals (2) auf eine solche Weise, dass die untere Wand (5) des Einlasskanals (2) relativ zu der Mittellinie (10) der Zylinderbohrung in einem ersten Winkel (α) positioniert ist, wobei der erste Winkel (α) zwischen 57° und 74°, insbesondere zwischen 60° und 70°, besonders bevorzugt zwischen 66° und 67° liegt.

11. Verfahren nach Anspruch 9 oder 10, wobei das Verfahren Folgendes umfasst:
- Positionieren der Einlassventilachse (8) auf eine solche Weise, dass die Einlassventilachse (8) relativ zu der unteren Wand (5) des Einlasskanals (2) in einem zweiten Winkel (β) positioniert ist, wobei der zweite Winkel (β) zwischen 40° und 53°, insbesondere zwischen 45° und 50°, besonders bevorzugt zwischen 47° und 48° liegt.

12. Verfahren nach einem der Ansprüche 9 bis 11, wobei das Verfahren Folgendes umfasst:
- Anordnen des Endbereichs (6) der unteren Wand (5) in einem dritten Winkel (γ) relativ zu der Fläche (13) der Einlassöffnung.

13. Verfahren nach einem der Ansprüche 9 bis 12, wobei das Verfahren Folgendes umfasst:
- Auswählen des ersten Winkels (a) auf eine solche Weise, dass ein durch die Einlassöffnung (3) geführter Flüssigkeitsstrom zu einem Auslassventil (12) des Zylinderkopfs (1) geleitet wird.

## Revendications

1. Culasse (1) pour moteur à combustion interne, ladite culasse (1) comprenant :
- au moins un canal d'admission (2) comprenant un orifice d'admission (3),
- le canal d'admission (2) comprenant une paroi supérieure (4), une paroi inférieure (5) et une zone terminale (6),
- l'orifice d'admission (3) comprenant un bord inférieur (7),
- une soupape d'admission agencée pour couvrir l'orifice d'admission (3), la soupape d'admission étant disposée suivant un axe (8) de la soupape d'admission, **caractérisée en ce que** :
- la paroi inférieure (5) dudit canal d'admission (2) est pour l'essentiel rectiligne dans le sens de la longueur,
- la paroi inférieure (5) du canal d'admission (2) est placée pour faire un premier angle (α) avec l'axe (10) d'une chambre de combustion (9),
- l'axe (8) de la soupape d'admission est placé pour faire un deuxième angle (β) avec la paroi inférieure (5) du canal d'admission (2),
- la zone terminale (6) du canal d'admission (2) s'étend sous forme de cône vers l'orifice d'admission (3) par rapport au reste du canal d'admission (2).

2. Culasse (1) selon la revendication 1, dans laquelle le premier angle (α) est compris entre 57° et 74°, plus précisément entre 60° et 70° et plus précisément encore entre 66° et 67°.

3. Culasse (1) selon la revendication 1 ou 2, dans laquelle le deuxième angle (β) est compris entre 40° et 53°, plus précisément entre 45° et 50° et plus précisément encore entre 47° et 48°.

4. Culasse (1) selon l'une quelconque des revendications précédentes, dans laquelle la paroi inférieure (5) dudit canal d'admission (2) a un rayon supérieur à 300 mm.

5. Culasse (1) selon l'une quelconque des revendications précédentes, dans laquelle la zone terminale (6) de la paroi inférieure (5) et la surface (13) de l'orifice d'admission sont disposées pour faire l'une avec l'autre un troisième angle (γ).

6. Culasse (1) selon la revendication 5, dans laquelle le troisième angle (γ) est inférieur à 130°, plus précisément inférieur à 80°.

7. Culasse (1) selon l'une quelconque des revendications 1 à 4, dans laquelle la zone terminale (6) de la paroi inférieure (5) et la surface (13) de l'orifice d'admission sont raccordées par un bord (13b) arrondi ayant un rayon R, dans laquelle le rayon R est inférieur à 2,5 mm.

8. Culasse (1) selon l'une quelconque des revendications précédentes, dans laquelle le premier angle (α) est choisi de telle sorte qu'un écoulement de fluide passant par l'orifice d'admission (3) soit dirigé vers une soupape d'échappement de la culasse (1).

9. Procédé pour améliorer la turbulence dans un moteur à combustion interne, le moteur à combustion interne comprenant :
- une culasse (1) qui est agencée pour être montée sur un bloc-cylindres (14),
- ladite culasse (1) comprenant au moins un canal d'admission (2) comprenant un orifice d'admission (3),
- le canal d'admission (2) comprenant une paroi supérieure (4), une paroi inférieure (5) et une zone terminale (6),
- une soupape d'admission agencée pour couvrir l'orifice d'admission (3), la soupape d'admission étant disposée suivant un axe (8) de la soupape d'admission, **caractérisé en ce que** le procédé comprend les opérations consistant à :
- agencer une paroi inférieure (5) pour l'essentiel rectiligne pour ledit canal d'admission (2),
- mettre en place le canal d'admission (2) de telle sorte que la paroi inférieure (5) du canal d'admission (2) soit placée pour faire un premier angle (α) avec l'axe (10) de l'alésage du cylindre,
- mettre en place l'axe (8) de la soupape d'admission de telle sorte que l'axe (8) de la soupape d'admission soit placé pour faire un deuxième angle (β) avec la paroi inférieure (5) du canal d'admission (2),
- agencer la zone terminale (6) du canal d'admission (2) pour qu'elle s'étende sous forme de cône vers l'orifice d'admission (3) par rapport au reste du canal d'admission (2).

10. Procédé selon la revendication 9, dans lequel le procédé comprend l'opération consistant à mettre en place le canal d'admission (2) de telle sorte que la paroi inférieure (5) du canal d'admission (2) soit placée pour faire un premier angle (α) avec l'axe (10) de l'alésage du cylindre,
dans lequel le premier angle (α) est compris entre 57° et 74°, plus précisément entre 60° et 70° et plus précisément encore entre 66° et 67°.

11. Procédé selon la revendication 9 ou 10, dans lequel le procédé comprend l'opération consistant à mettre en place l'axe (8) de la soupape d'admission de telle sorte que l'axe (8) de la soupape d'admission soit placé pour faire un deuxième angle (β) avec la paroi inférieure (5) du canal d'admission (2),
dans lequel le deuxième angle (β) est compris entre 40° et 53°, plus précisément entre 45° et 50° et plus précisément encore entre 47° et 48°.

12. Procédé selon l'une quelconque des revendications 9 à 11, dans lequel le procédé comprend l'opération consistant à disposer la zone terminale (6) de la paroi inférieure (5) pour qu'elle fasse un troisième angle (γ) avec la surface (13) de l'orifice d'admission.

13. Procédé selon l'une quelconque des revendications 9 à 12, dans lequel le procédé comprend l'opération consistant à choisir le premier angle (α) de telle sorte qu'un écoulement de fluide passant par l'orifice d'admission (3) soit dirigé vers une soupape d'échappement (12) de la culasse (1).
